# EUROPÄISCHE PATENTSCHRIFT

(11) **EP 0 868 641 B1**
(45) Veröffentlichungstag und Bekanntmachung des Hinweises auf die Patenterteilung: **20.09.2000**
(21) Anmeldenummer: 96942271.6
(22) Anmeldetag: 11.11.1996
(51) Int. Cl.: F27B 17/00, H05B 6/80, B22C 9/12

(54) **EINRICHTUNG ZUR MIKROWELLENBEAUFSCHLAGUNG VON MATERIALIEN UND STÜCKGÜTERN**
DEVICE FOR APPLYING MICROWAVES TO MATERIALS AND INDIVIDUAL ITEMS
DISPOSITIF PERMETTANT D'APPLIQUER DES MICRO-ONDES A DES MATERIAUX ET A DES ARTICLES INDIVIDUELS

(30) Priorität: 20.11.1995 DE 19543266
(43) Veröffentlichungstag der Anmeldung: 07.10.1998
(73) Patentinhaber: Schulze, Reinhard, D-56477 Rennerod (DE)
(72) Erfinder: Schulze, Reinhard, D-56477 Rennerod (DE)
(74) Vertreter: Fiedler, Otto Karl, Dipl.-Ing.
(86) Internationale Anmeldenummer: EP9604925
(87) Internationale Veröffentlichungsnummer: WO9719308

(56) Entgegenhaltungen:
- WO-A-95/13888
- DE-B- 1 221 258
- DE-C- 4 033 893
- DE-U- 8 913 264
- FR-A- 908 314
- US-A- 3 942 260
- US-A- 4 940 865

## Beschreibung

Die Erfindung betrifft eine Einrichtung zur Mikrowellenbeaufschlagung von Materialien und Stückgütern gemäss dem Oberbegriff des Patentanspruchs 1 (siehe US-4 940 865 A).

Einrichtungen dieser Art sind als Stand der Technik allgemein bekannt und für verschiedenste industrielle Anwendungen im Einsatz, u.a. für Zwecke der Erhitzung, insbesondere Trocknung, z.B. von Formen und Kernen in der Giessereitechnik, aber auch für die Auslösung und Steuerung von reaktiven Prozessen wie die Aushärtung von Kunststoffen und dergl.. Wesentlich für den industriellen Ensatz ist dabei der Raumbedarf nicht nur der Mikrowellenanlagen selbst, vor allem der Mikrowellenkammern, sondern auch der zugehörigen Beschickungseinrichtungen. Im Hinblick auf den rationellen Ablauf von Durchlaufprozessen ist in diesem Zusammenhang insbesondere die konstruktive Anpassung der Kammern mit ihren Beschickungsdurchlässen an unterschiedliche Gegebenheiten des Prozesses und der Behandlungsgüter sowie der betrieblichen Umgebung von Bedeutung.

Die Aufgabe der Erfindung erstreckt sich daher auf die Schaffung von Gestaltungsformen der Mikrowelleneinrichtungen, die eine solche Anpassung ermöglichen bzw. erleichtern. Die erfindungsgemsse Lösung dieser Aufgabe ist bestimmt durch die Merkmale des Anspruchs 1. Wesentliche Weiterbildungen ergeben sich ferner durch die Merkmale der nachgeordneten Ansprüche.

Zufolge Anspruch 1 umfasst die erfindungswesentliche Merkmalskombination im Bereich einer im Betriebszustand mikrowellenseitigen Oberfläche des Verschlusselementes angeordnete Transportmittel für den Durchlauf-Vorschub des Behandlungsgutes, wobei diese Transportmittel mit der Schliessbewegung des Verschlusselementes in die Mikrowellenkammer einfahrbar sowie mikrowellenfest bzw. mikrowellendicht ausgebildet sind. Dies erlaubt eine oft optimale Anpassung der Mikrowellenanlage für niedrig geführte, insbesondere unmittelbar am Gebäudeboden bewegte Behandlungsgüter und entsprechende Transportsysteme, vor allem bei schweren oder sperrigen Stückgütern. Auch bietet dann eine Anordnung der Kammer über dem Beschickungsbereich den Vorteil einer platzsparenden Konstruktion mit geringem Grundflächenbedarf.

Die Lösungsvariante gemäss Anspruch 2 mit einem Beschickungsdurchlass, der in Verbindung mit einem hoch geführten Transportsystem im Deckenbereich der Mikrowellenkammer angeordnet ist, kommt u.a. mit Vorteil in Verbindung mit hoch geführten Transportsystemen in Betracht, vor allem z.B. für hängend transportierte Behandlungsgegenstände sowie für über hochliegende Behälterauslässe oder Rinnen zugeführte Schüttmaterialien. Der Beschickungsbereich kann hier über der Kammer angeordnet werden, wobei sich wiederum eine platzsparende Konstruktion mit geringem Grundflächenbedarf ergibt.

Im Gegensatz zu üblichen Konstruktionen mit im wesentlichen ortsfest ruhend angeordneter Mikrowellenkammer, wobei die Abschlussvorrichtung zur Umstellung zwischen Schliessstellung und Offenstellung beweglich ausgebildet ist, ermöglicht die Lösungsvariante gemäss Anspruch 4 - unter Berücksichtigung der Gegebenheiten des Anwendungsfalles - folgende Vorteile:

Bei Durchlaufprozessen ist es oft erwünscht, Einbringen und Ausbringen des Behandlungsgutes mit einer Beschickungsbewegung nur in einer Richtung, d.h. ohne Richtungsumkehr durchzuführen. Im Falle der üblichen, bezüglich der Transportmittel ruhenden Kammeranordnung erfordert dies zwei einander gegenüberliegend angeordnete Durchlässe mit entsprechend erhöhtem Aufwand für Verschluss- und Stellmittel sowie Mikrowellendichtungen. Grundsätzlich ist bei der Gestaltung gemäss Anspruch 4 für einen Gutwechsel ohne Richtungsumkehr ein einziger Beschickungsdurchlass ausreichend, indem nämlich die verfahrbare Kammer oder ein geeignet ausgebildeter Kammerteil mit entsprechenden Wandabschnitten die Behandlungsposition des Gutes sowie die Zu- und Abführwege in der Offenstellung vollständig freigibt. Beim Übergang in die Schliessstellung wird der bewegliche Kammerteil über das Gut hinweg verfahren und umgreift dieses mit seinen Wandabschnitten, die schliesslich mit der Abschlussvorrichtung in mikrowellendichte Verbindung treten. Ferner folgt hieraus die Möglichkeit, das Behandlungsgut - insbesondere voluminöse Behandlungsgüter oder z.B. Behälter mit darin enthaltenem Behandlungsgut - bei in Offenstellung befindlicher, d.h. aus dem Transportweg des Gutes herausgefahrener Kammer geradlinig sowie ohne Hebe- und Senkvorgänge in die Behandlungsposition zu verbringen und weiterzubefördern. Eine solche Konstruktion kann gegebenenfalls in Kombination mit den Merkmalen der Lösungsvarianten gemäss Anspruch 1 oder 2 ausgeführt werden, wodurch sich auch die dort angegebenen und weitere kombinatorische Vorteile ergeben.

Andererseits kann es zufolge dem zugeordneten Anspruch 6 bei bestimmten Anwendungsverhältnisse sinnvoll sein, die Abschlussvorrichtung und die Mikrowellenkammer zur Umstellung zwischen Schliesszustand und Offenzustand beweglich auszubilden. Im wesentlichen sind damit entsprechende Vorteile erzielbar.

Zufolge der Lösungsvariante gemäss Anspruch 7 umfasst die Mikrowellenkammer einen ruhenden ersten Teil, der mit Abstand von einem ebenfalls ruhenden Verschlusselement angeordnet ist. Dieser ruhende erste Kammerteil enthält vorzugsweise die Mikrowellenspeisung oder einen wesentlichen Teil derselben, insbesondere wenigstens ein Magnetron und/oder Wellenleiter mit zugehörigen Anpassungs- und gegebenenfalls Abstimmelementen an sich bekannter Art. Die Kammer umfasst ferner einen beweglichen zweiten Teil, der als Bestandteil der Abschlussvorrichtung zwischen Schliessstellung und Offenstellung beweglich ausgebildet ist. Dies ermöglicht wiederum eine vorteilhafte Konstruktion mit nur einem Beschickungsdurchlass, der durch den Abstand zwischen dem ruhenden Verschlusselement und dem ebenfalls ruhenden ersten Kammerteil gebildet ist. Ferner gelten auch die übrigen zur Lösungsvariante gemäss Anspruch 4 aufgeführten Vorteile. Darüberhinaus können nun aber die Mikrowellenspeisung bzw. deren wesentliche Bestandteile in Verbindung mit dem ersten Kammerteil ruhend angeordnet werden.

Sofern im Sinne vorstehender Erfindungsmerkmale eine nicht an der Öffnungs- und Schliessbewegung teinehmende Abschlussvorrichtung oder ein geeigneter Teil derselben vorhanden ist, kann die Mikrowellenspeisung gegebenenfalls dort untergebracht werden. Dadurch ergibt sich Freizügigkeit in der Gestaltung einer zwischen Offen- und Schliessstellung beweglichen Kammer oder entsprechender Teile derselben.

Sowohl im Falle einer im vorstehenden Sinn beweglichen, vor allem aber auch einer festehenden Abschlussvorrichtung sowie allenfalls sogar in Kombination mit einer Mikrowellenspeisung oder Teilen derselben kommt es in Weiterbildung der Erfindung in Betracht, ein Verschlusselement oder mehrere derselben als Auflage oder Aufnahme für Behandlungsgut auszubilden. Dies kann u.a. deswegen Vorteile bieten, weil solche Verschlusselemente oft im wesentlichen nur zweidimensionale, meist plattenartige Gebilde sind, die im Gegensatz zur Kammer von grösseren abgewinkelten Seitenteilen freigehalten werden können und daher in einfacher Konstruktionsweise für die erwünschte eng benachbarte Anordnung von zu- und abführenden Transportmitteln zugänglich sind. Im Falle von an der Öffnungs- und Schliessbewegung teilnehmenden Verschlusselementen können diese sogar Komponenten der Transportbewegung übernehmen und z.B. das aufliegende Behandlungsgut in die Kammer und wieder aus dieser heraus befördern.

Dazu sieht eine bevorzugte Ausführungsform der Erfindung vor, dass mindestens ein Verschlusselement innerhalb seiner Bewegungsbahn zwischen Schliessstellung und Offenstellung in wenigstens annähernd horizontaler Lage geführt ist. Dies erleichtert eine einfache Lagesicherung des Gutes.

Weiterhin können Verschlusselemente in Weiterbildung der Erfindung mit Halterungsmitteln und/oder Transportmitteln, insbesondere wenigstens einer Rollenbahn, für das Behandlungsgut versehen sein. Solche Verschlusselemente stellen dann eine Komponente des Transportsystems dar und ermöglichen eine konstruktiv relativ einfache Gestaltung einer durchgehenden Transportbahn. Die Halterungs-bzw. Transportmittel können dann mit wesentlichen Vorteilen hinsichtlich Robustheit und Betriebssicherheit im Bereich einer im Betriebszustand mikrowellenseitigen Oberfläche des Verschlusselementes angeordnet und mit diesem in die Mikrowellenkammer einfahrbar, insbesondere mikrowellenfest bzw. gegen Mikrowellenzutritt und/oder Mikrowellenaustritt abgedichtet ausgebildet sein.

Gegenüber der vorstehend allgemein dargestellten Erfindung sei folgender Stand der Technik als relevant diskutiert:

Die US-A-4 940 865 befasst sich nicht mit dem Problem der Anpassung der Beschickung einer Mikrowellenkammer mit Behandlungsgut, d.h. mit dem Übergang desselben zwischen einem Ab- und Zuführungs-Transportsystem einerseits und der Mikrowellenkammer andererseits. Es ist dort - soweit hier von Interesse - nur der Übergang von einer bereits im Bereich des Beschickungsdurchlasses befindlichen Behandlungsgutes in die Kammer behandelt mittels eines im Kammerboden angeordneten Beschickungsdurchlasses.

Die WO-A-95/13888 zeigt neben der allgemein brkannten Seitenzuführung von Behandlungsgut an Mikrowellenkammern nur Durchlauf-Transportsysteme ohne speziell zugeschnittene Ausbildungen an den Kammern selbst. Dies kann zum vorliegenden Problemkreis nichts wesentliches beitragen

Die DE-B-1 221 258 befasst sich nicht mit Mikrowellenkammern, sondern zeigt nur eine Überkopfanordnung von heb- und senkbaren Heizhauben an konventionellen Glühöfen. Eine bewegbare Gestaltung von mit Mikrowellenspeisung und ihren empfindlichen Magnetrons sowie ebensolchen Abdichtungen und mit in solchem Fall flexiblen Leitungssystemen verbundenen Kammern war dadurch nicht nahegelegt.

Die Erfindung und weitere wesentliche Merkmale derselben werden nachstehend anhand der in Zeichnungen schematisch wiedergegebenen Ausführungsbeispiele ergänzend erläutert.

Es zeigt:
- Fig.1: ein erstes Beispiel einer erfindungsgemässen Mikrowellenanlage mit feststehend angeordneter, im Bodenbereich mit einem Beschickungsdurchlass versehener Mikrowellenkammer und entsprechend untenliegendem Durchlauf-Transportsystem in einem Teil-Vertikalschnitt mit Schnittebene parallel zur Transportrichtung;
- Fig.2: ein zweites Beispiel einer erfindungsgemässen Mikrowellenanlage mit zwischen Schliess- und Offenstellung beweglich angeordneter Mikrowellenkammer, ansonsten ähnlich aufgebaut wie die Ausführung nach Fig.1 und in der gleichen Darstellungsweise;
- Fig.3: ein drittes Beispiel einer erfindungsgemässen Mikrowellenanlage mit wiederum feststehend angeordneter, jedoch im Deckenbereich mit einem Beschickungsdurchlass versehener Mikrowellenkammer und entsprechend obenliegendem Durchlauf-Transportsystem, Darstellungsweise wie vorstehend;
- Fig.4: ein viertes Beispiel einer erfindungsgemässen Mikrowellenanlage mit wiederum im Deckenbereich mit einem Beschickungsdurchlass versehener Mikrowellenkammer und entsprechendem Durchlauf-Transportsystem, jedoch mit einem feststehenden und einem zwischen Schliess- und Offenstellung beweglichen Kammerteil, Darstellungsweise ebenfalls wie vorstehend;
- Fig.5: zum Ausführungsbeispiel gemäss Fig.4 den Querschnitt einer Mikrowellendichtung zwischen dem beweglichen Kammerteil und einem Verschlusselement;
- Fig.6: ebenfalls zum Ausführungsbeispiel gemäss Fig.4 den Querschnitt einer Mikrowellendichtung zwischen dem beweglichen und dem feststehenden Kammerteil.

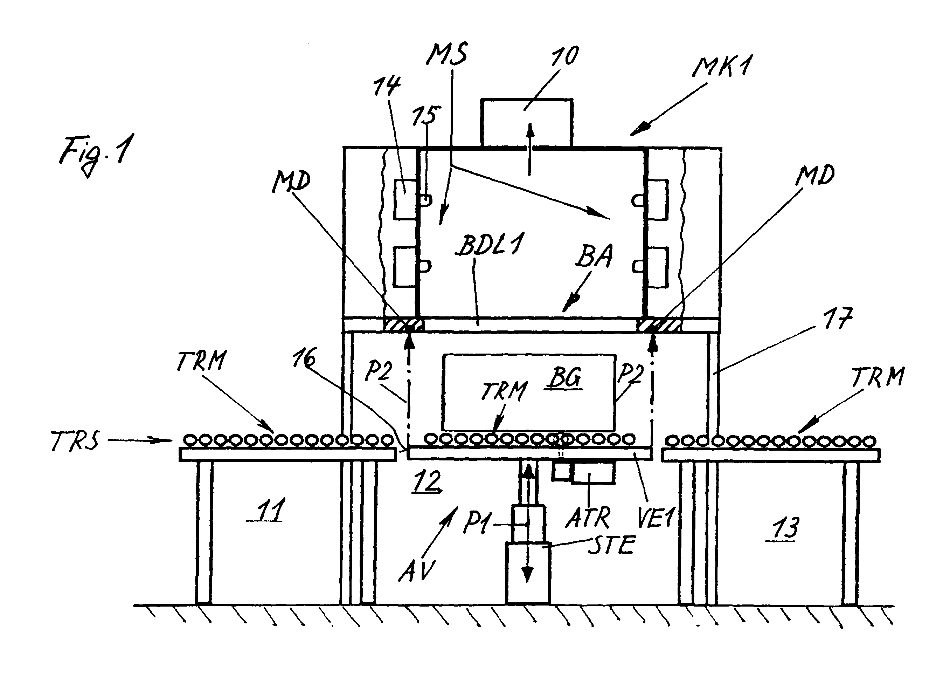

Im Beipiel gemäss Fig.1 umfasst die Mikrowellenanlage eine multimodale Mikrowellenkammer MK1. Das Kennzeichen dieses bekannten Kammertyps ist ein durch Vielfach-Reflexionen erzeugtee, sogenanntes "wildes" Mikrowellenfeld mit Moden- und Frequenzaufspaltung sowie einer chaotischen, günstigenfalls quasistationären und im Leerlauf nicht zu stark ungleichförmigen Energieverteilung, er zeichnet sich aus durch konstruktive Einfachheit und findet breite Anwendung.

Die Kammer MK1 ist in an sich üblicher Weise mit einer Mikrowellenspeisung MS versehen, die eine grössere Anzahl von an der Kammerwand angeordneten Magnetrons 14 aufweist. Im Beispiel ist angenommen, dass die Antennen 15 der Magnetrons ohne zwischengeschaltete Wellenleiter unmittelbar in den Innenraum der Kammer eingreifend angeordnet sind, was für einen multimodalen Betrieb grundsätzlich ausreichend ist. Eine Absaugung 10 besorgt die Entfernung von Dämpfen und Gasen, die bei der Behandlung entstehen. Innerhalb des Bodenabschnitts BA der Kammer ist ein Beschickungsdurchlass BDL1 gebildet, der sich in einer Horizontalebene erstreckt.

Die Kammer MK1 ist auf einem Gestell 17 in erhöhter Lage über einem Transportsystem TRS für das im Taktbetrieb durchlaufende Behandlungsgut BG angeordnet. Für letzteres ist beispielsweise ein mikrowellendurchlässiger Behälter mit nicht näher dargestelltem, durch die Mikrowellen zu beaufschlagendem Material angedeutet. Das Transportsystem ist in aufeinanderfolgende Statione 11, 12, 13 aufgeteilt, die Transportmittel TRM in Form von Rollenbahnen mit zugehörigen Antriebsmitteln ATR aufweisen. Letztere sind der Übersichtlichkeit halber nur an der mittleren Station 12 angedeutet. Die Transportmittel der Stationen sind so ausgebildet, dass die Behälter mit Behandlngsgut die Abstände zwischen den aufeinanderfolgenden Rollenbahnen störungsfrei überwinden können.

Die Station 12 befindet sich vertikal unterhalb des Beschikkungsdurchlasses BDL1 der Mikrowellenkammer und umfasst eine Abschlussvorrichtung AV mit einem plattenartigen Verschlusselement VE1, das sich ebenfalls in einer Horizontalebene erstreckt und dessen Aussenrand 16 den Innenrand der Durchlasses BDL1 in Vertikalprojektion um eine vorgegebenes Mass übergreift. Das Verschlusselement VE1 bildet auch ein Tragelement für die Transportmittel TRM der Station 12 und ist mit einer darunter angeordneten Stelleinrichtung STE verbunden, mittels deren das Verschlusselement VE1 im Sinne des Doppelpfeils P1 aus der wiedergegebenen Offenstellung unter Einfahren des Behandlungsgutes BG in die Kammer in eine Schliessstellung angehoben und nach der Behandlung wieder abgesenkt werden kann. Beim Anheben des Verschlusselementes tritt dessen übergreifender Randbereich gemäss Pfeilen P2 mit einer z.B. an sich üblichen Mikrowellendichtung MD in Verbindung, die an der Unterseite des Randbereiches des Beschickungsdurchlasses BDL1 angeordnet ist und diesen in einer Horizontalebene lückenlos umgibt. Der Durchlauf des Behandlungsgutes geschieht in aufeinanderfolgenden Vorschub- und Stillstandtakten, wobei das Behandlungsgut bzw. ein entsprechender Behälter oder eine definiert umgrenzte Ladung von Behandlungsgut in den Stillstandtakten mittels üblicher und nicht dargestellter Lagesensoren und Steuerungsmittel zum Beschickungsdurchlass vertikal fluchtend ausgerichtet wird.

Aus der vorstehenden Erläuterung geht als erfindungswesentlich hervor, dass mindestens ein Verschlusselement als Auflage oder Aufnahme für Behandlungsgut ausgebildet ist, was in manchen Anwendungen eine vorteilhafte Vereinfachung darstellt. Dabei können gegebenenfalls anstelle oder auch in Verbindung mit den beispielhaft angedeuteten Transportmitteln an dem Verschlusselement Halterungsmitteln, z.B. Klammern oder Sicherungsanschläge, für das Behandlungsgut vorgesehen werden. Die Halterungs- bzw. Transportmittel sind dabei im Bereich einer im Betriebszustand mikrowellenseitigen Oberfläche des Verschlusselementes angeordnet und mit diesem in die Mikrowellenkammer einfahrbar, insbesondere mikrowellenfest bzw. gegen Mikrowellenzutritt und/oder Mikrowellenaustritt abgedichtet ausgebildet, vorzugsweise im Bereich von Wellendurchführungen oder Lagern. Erfahrungsgemäss lässt sich in dieser Weise die erforderliche Mikrowellendichtheit nach aussen und gegebenenfalls der Schutz von mikrowellenempfindlichen Bauteilen einfach und sicher erreichen. Insbesondere hat sich hier eine Konstruktion bewährt, bei der ein Verschlusselement einen sich längs einer Aussenkontur des Verschlusselementes erstreckenden Mikrowellen-Dichtungsbereich aufweist, der im Schliesszustand einem entsprechenden Mikrowellen-Dichtungsbereich der Mikrowellenkammer zugeordnet ist. Die Aufnahme-, Auflage-, Halterungs bzw. Transportmittel für das Behandlungsgut sind dabei auf einem mikrowellenseitigen Oberflächenabschnitt und innerhalb des Mikrowellen-Dichtungsbereichs des Verschlusselementes angeordnet.

Für die Betriebssicherheit der Einrichtung ist es wichtig, das Verschlusselement innerhalb seiner Bewegungsbahn zwischen Schliessstellung und Offenstellung in wenigstens annähernd horizontaler Lage zu führen. Dies erleichtert die Lagesicherung und ermöglicht höhere Verstellgeschwindigkeiten. Ferner ist es wesentlich, dass die Randkontur wenigstens eines Abschnitts des Beschickungsdurchlasses im wesentlichen in einer Ebene verläuft und die Relativbewegung P2 des Verschlusselementes mindestens in einem zur Schliessstellung benachbarten Abschnitt der Bewegungsbahn im Winkel, insbesondere unter einem wenigstens annähernd rechten Winkel, zu der Ebene der Randkontur des Beschickungsdurchlasses gerichtet ist. Für die Relativbewegung des Verschlusselementes kommt auch ein wenigstens abschnittsweise gekrümmter Verlauf in Betracht, der insbesondere vorteilhaft mit Hilfe eines Mehrlenkergetriebe und/oder ein Gleitbahn- bzw. Rollbahngetriebe verwirklicht werden kann.

Im übrigen versteht es sich, dass im Sinne der Erfindung gegebenenfalls eine Mehrzahl von Beschickungsdurchlässen und Abschlussvorrichtungen bzw. Verschlusselementen an einer Mikrowellenkammer vorgesehen sein kann. Ebenso liegt es im Rahmen der erfindungsgemässen Lösungen, die Mikrowellenspeisung oder Teile derselben, z.B. Magnetrons und/oder zugehörige Wellenleiter, Abstimm- und Anpassmittel an ruhenden Abschlussvorrichtung vorzusehen. Dies kann insbesondere im Falle einer ruhenden Abschlussvorrichtung von Vorteil sein.

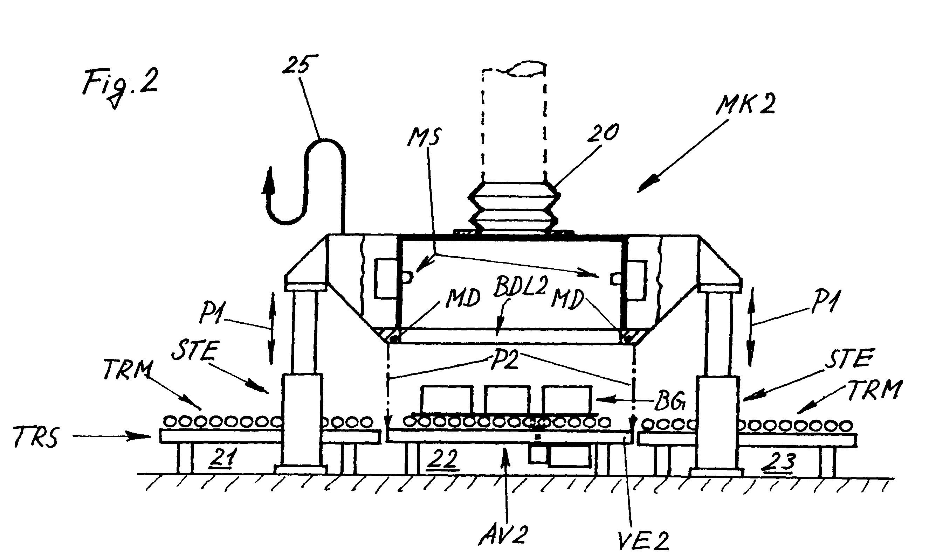

Im Ausführungsbeispiel gemäss Fig.2 ist wiederum eine Mikrowellenkammer MK2 mit einer Mikrowellenspeisung MS und einem innerhalb des Bodenabschnitts BA der Kammer angeordneten Beschickungsdurchlass BDL2 vorgesehen. Auch findet sich eine Abschlussvorrichtung AV2 mit einem plattenartigen Verschlusselement VE2, das wie der Beschickungsdurchlass BDL2 in einer Horizontalebene angeordnet ist und dessen Aussenrand wie bei der Ausführung nach Fig.1 den Innenrand der Beschickungsdurchlasses in Vertikalprojektion um eine vorgegebenes Mass übergreift. Im Gegensatz zu der Ausführung nach Fig.1 ist jedoch die Abschlussvorrichtung AV2 im wesentlichen ortsfest angeordnet und die Mikrowellenkammer MK2 zur Umstellung zwischen Schliesszustand und Offenzustand beweglich ausgebildet. In Fig.2 ist die angehobene Offenstellung angedeutet.

Für die Mikrowellenkammer ist eine Stelleinrichtung STE mit vertikalen Hydraulikzylindern vorgesehen, die gemäss Doppelpfeilen P1 das Anheben der Mikrowellenkammer in die angedeutete Offenstellung und gemäss Pfeilen P2 das Absenken in die Schliessstellung besorgen. Unterhalb der Kammer befindet sich wiederum ein Transportsystem TRS mit aufeinanderfolgende Stationen 21, 22, 23 und Transportmittel TRM in Form von Rollenbahnen für das im Taktbetrieb durchlaufende Behandlungsgut BG. Die mittlere Station 22 umfasst ein ortsfestes, plattenartiges Verschlusselement VE2, das gleichzeitig Träger für die Transportmittel ist. Die Station 12 befindet sich wieder vertikal unterhalb des Beschikkungsdurchlasses der Mikrowellenkammer, so dass eine den Durchlass umgebende Mikrowellendichtung MD beim Absenken der Kammer gemäss Pfeilen P2 mit dem übergreifender Randbereich des Verschlusselementes VE2 in Wirkverbindung tritt. Ersichtlich bietet diese Konstruktion den Vorteil eines einfacheren und niedrigeren Aufbaues des Transportsystems. Einen gewissen Aufwand erfordert allerdings die bewegliche Anordnung der Mikrowellenkammer, nämlich im wesentlichen einen höhenveränderlichen Anschluss der Absaugung 20 - hier beispielsweise als Faltenbalg angedeutet - sowie bewegliche elektrische Anschlussleitungen 25 für die Mikrowellenspeisung. Die Anwendung entscheidet über die Gewichtung der jeweiligen Vorteile.

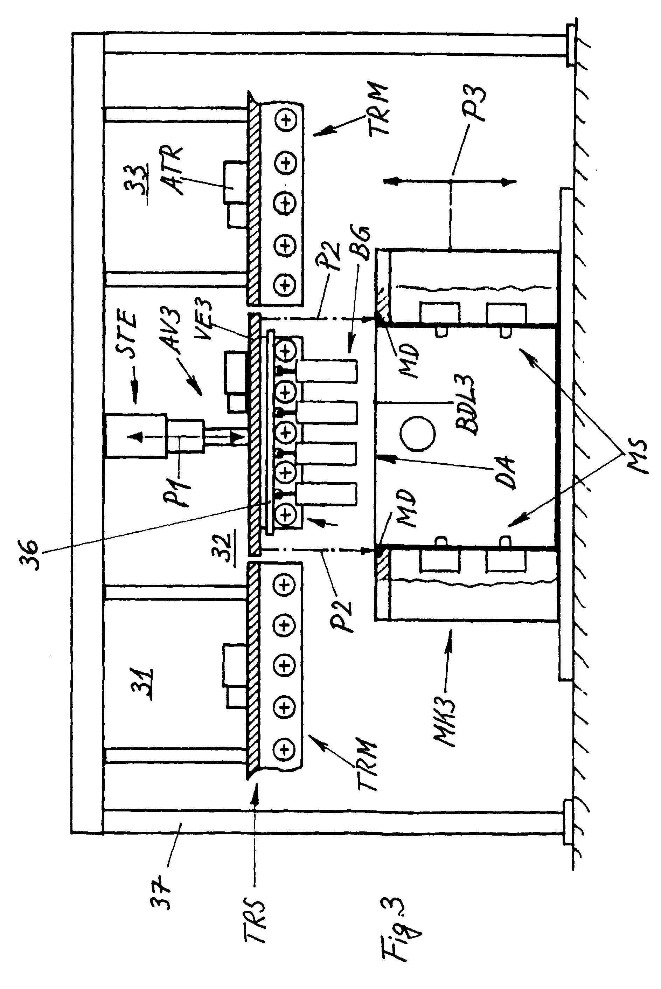

Die Ausführung gemäss Fig.3 stellt sich als räumlichvertikale Invertierung derjenigen gemäss Fig.1 dar, indem hier eine untenliegende, ortsfeste Mikrowellenkammer MK3 mit in deren Deckenabschnitt DA angeordnetem Beschickungsdurchlass BDL3 sowie ein obenliegendes, an einem Traggestell 37 befestigtes Transportsystem TRS mit aufeinanderfolgenden Stationen 31, 32, 33 vorgesehen ist. Das Transportsystem entspricht im wesentlichen der Ausführung nach Fig.1, jedoch mit hängend angeordneten Rollenbahnen als Transportmittel TRM.

Demgemäss ist das beispielsweise aus jeweils einer Gruppe von Werkstücken oder dergl. bestehende Behandlungsgut BG an einer Tragplatte 36 aufgehängt, die auf quer zur Zeichnungsebene mit gegenseitigem Horizontalabstand angeordneten Laufrollenreihen liegt und durch einen Rollenantrieb im Takt transportiert wird.

Die mittlere Station 32 bildet wieder eine Abschlussvorrichtung AV3 mit einem plattenartigen Verschlusselement VE3, das mittels einer Stelleinrichtung STE gemäss Doppelpfeil P1 vertikal zwischen der gezeigten Offenstellung und einer abgesenkten Schliessstellung verfahrbar ist. Der Aussenrand des Verschlusselementes VE3 übergreift wie bei der Ausführung nach Fig.1 den Innenrand des Beschickungsdurchlasses BDL3 der Mikrowellenkammer in Vertikalprojektion um eine vorgegebenes Mass. Beim Absenken in die Schliessstellung tritt der äussere Randbereich des Verschlusselementes VE3 an seiner Unterseite mit einer Mikrowellendichtung MD am Innenrand des Beschickungsdurchlasses BDL3 in Wirkverbindung.

Es versteht sich im Sinne der Erfindung, dass in einer gegebenenfalls sinnvollen Weiterbildung Merkmale der Ausführungen gemäss Fig. 2 in diejenige gemäss Fig.3 derart integriert werden können, dass sowohl die Abschlussvorrichtung AV3 als auch die Mikrowellenkammer MK3 vertikal verstellbar sind, und zwar jeweils zueinander gegensinnig zwischen Schliess- und Offenstellung. Dies ist in Fig.3 schematisch, jedoch ohne weiteres verständlich, nur durch einen der Mikrowellenkammer zugeordneten Doppelpfeil P3 veranschaulicht.

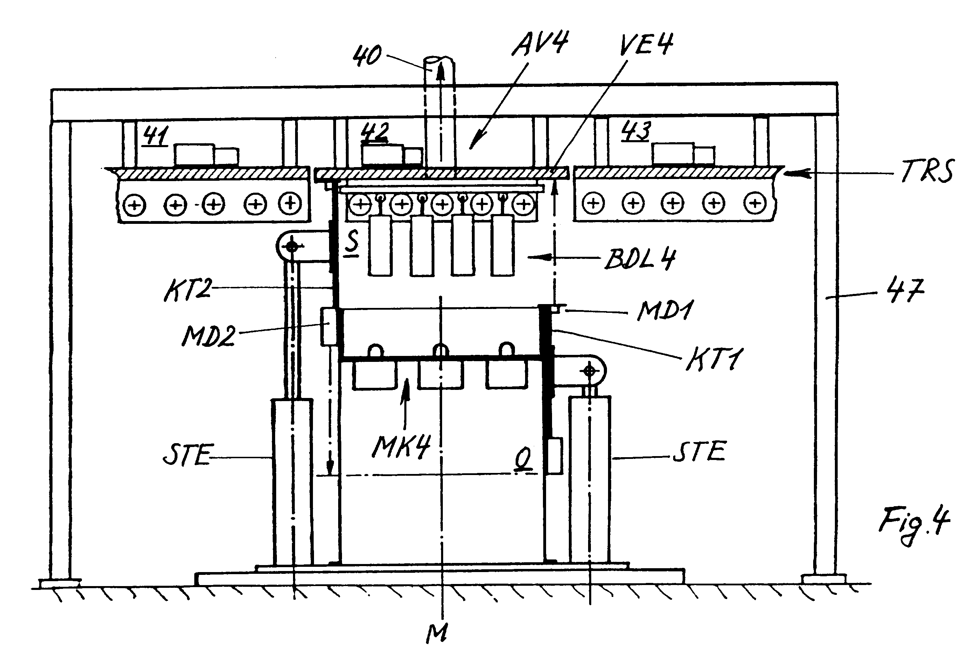

Bei der Ausführung gemäss Fig.4 umfasst die Mikrowellenkammer MK4 einen feststehenden unteren Kammerteil KT1 und einen ebensolchen, als Verschlusselement VE4 ausgebildeten Bestandteil einer Abschlussvorrichtung AV4. Der Kammerteil KT1 und das Verschlusselement VE4 sind mit gegenseitigem Vertikalabstand angeordnet und bilden so einen längs des gesamten Kammerumfangs frei zugänglichen Beschickungsdurchlass BDL4.

Ein obenliegendes Transportsystem TRS mit aufeinanderfolgenden Stationen 41, 42, 43 ist an einem Traggestell 47 befestigt und entspricht weitgehend der Ausführung nach Fig.3, wobei jedoch die mittlere Station 42 auf gleicher Höhe mit den beiden anderen Stationen feststehend ausgebildet ist. Diesbezüglich ist auf die bereits erwähnten Vorteil eines durchgehenden, insgesamt feststehenden Transportsystems hinzuweisen. Gleichwohl ist die Station 42 mit ihrem als horizontale Tragplatte ausgebildeten Verschlusselement VE4 Bestandteil der Abschlussvorrichtung AV4, nämlich zusammen mit einem zweiten Teil KT2 der Mikrowellenkammer, der zwischen einer oberen Schliessstellung und einer unteren Offenstellung mittels einer hydraulischen Stelleinrichtung STE ähnlich Fig.2 vertikal verfahren werden kann. Der zweite Kammerteil KT2 ist als den ersten Kammerteil KT1 verschiebbar umgreifender Mantelkörper ausgebildet. In der Halbdarstellung links der Vertikal-Mittellinie M ist der Kammerteil KT2 in seiner oberen Schliessstellung S, in der Halbdarstellung rechts dieser Mittellinie in seiner unteren Offenstellung 0 angedeutet. An der oberen Kante des zweiten Kammerteils ist eine Mikrowellendichtung MD1 vorgesehen, die in der Schliessstellung mt dem Verschlusselement VE4 in Verbindung tritt, während sich am unteren Ende des zweiten Kammerteils eine den ersten Kammerteil umgreifende Mikrowellendichtung MD2 befindet, die mindestens bei Erreichen der Schliesstellung wirksam wird. Eine Mikrowellenspeisung MS ist in dem ersten ruhenden Kammerteil untergebracht, sie kann jedoch gegebenenfalls auch teilweise im Bereich anderer Wandungsabschnitte vorgesehen werden. Eine Absaugung 40 führt bei dieser Konstruktion durch das plattenförmige Verschlusselement VE4.

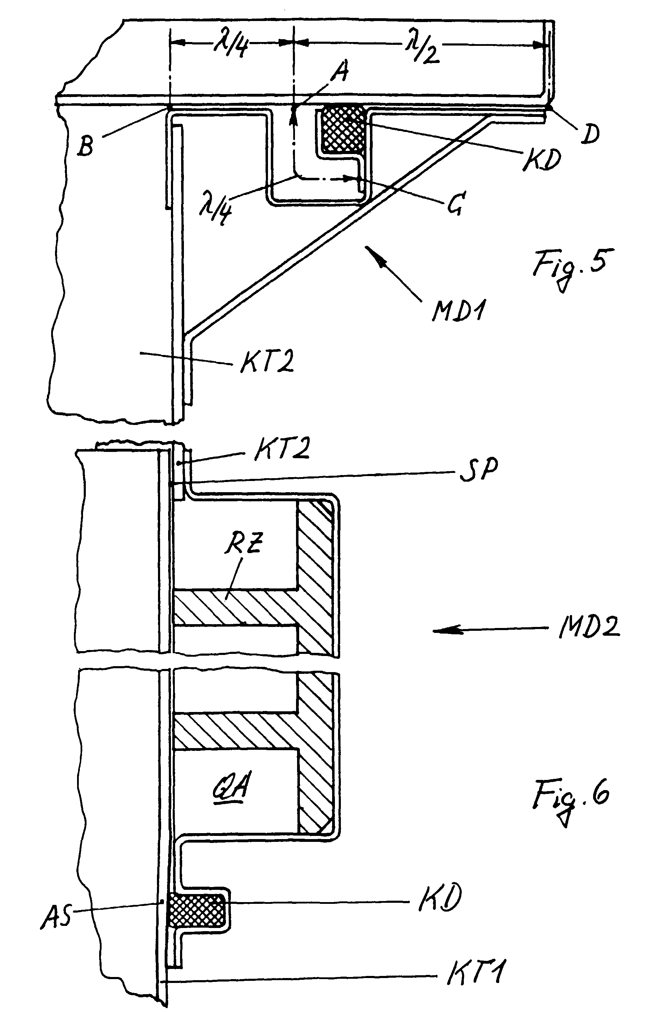

Fig.5 zeigt den Querschnitt der Mikrowellendichtung MD1 in grösserem Massstab. Es handelt sich um eine prinzipiell bekannte reaktive Sperre mit zwei Mikrowellen-Laufwegen von je einer Viertelwellenlänge zwischen den Punkten A und B sowie A und C sowie mt einem Laufweg von einer Halbwellenlänge zwischen den Punkten A und D. Es bildet sich auf diesen Laufwegen eine stehende Welle mit Maxima des Verschiebungs- bzw. Wandstroms im Bereich der Punkte B und C sowie Minima im Bereich der Punkte A und D. In möglichster Nähe des Punktes A ist zusätzlich eine Kontaktdichtung KD vorgesehen.

Fig.6 zeigt im gleichnen Massstab wie Fig.5 eine reaktive Sperrflterdichtung mit in Austrittsrichtung der Mikrowellen durch den Spalt SP zwischen erstem und zweitem Kammerteil aufeinanderfolgenden Rippen oder Zapfen RZ und Querausnehmungen QA. Solche Sperrfilter sind im Prinzip bekannt z.B. aus JOURNAL OF MICROWAVE POWER, 8(1), 1973, Seiten 101 bis 110. Zusätzlich ist eine Kontaktdichtung KD vorgesehen, die im Verlauf der Schliessbewegung des zweiten Kammerteils zwecks Verschleissminderung erst beim Überwinden eines leicht nach aussen, d.h. in Richtung sich verkleinernder Breite des Spaltes SP geneigten Abschnitts AS der Wandung des ersten Kammerteils wirksam wird.

## Patentansprüche

1. Einrichtung zur Mikrowellenbeaufschlagung von Materialien oder Stückgütern, umfassend folgende Merkmale:
a) es ist eine insbesondere multimodale Mikrowellenkammer vorgesehen, die mindestens einen Beschickungsdurchlass sowie eine Abschlussvorrichtung mit einem Verschlusselement aufweist;
b) wenigstens ein erster Teil der Mikrowellenkammer und die Abschlussvorrichtung sind relativ zueinander beweglich gelagert, und es ist eine Stelleinrichtung zur Umstellung zwischen Schliessstellung und Offenstellung vorgesehen; die Einrichtung ist gekennzeichnet dadurch daß
c) im Bereich einer im Betriebszustand mikrowellenseitigen Oberfläche des Verschlusselementes (VE1) Transportmittel (TRM) für den Durchlauf-Vorschub des Behandlungsgutes (BG) angeordnet und mit einer Schliessbewegung des Verschlusselementes in die Mikrowellenkammer (MK1) einfahrbar sowie mikrowellenfest bzw. mikrowellendicht ausgebildet sind.

2. Einrichtung nach Anspruch 1, dadurch gekennzeichnet, dass der Beschickungsdurchlass (BDL3) in Verbindung mit einem hoch geführten Transportsystem im Deckenbereich der Mikrowellenkammer (MK3) angeordnet ist.

3. Einrichtung nach Anspruch 2, dadurch gekennzeichnet, dass im Bereich einer im Betriebszustand mikrowellenseitigen Oberfläche des Verschlusselementes (VE3) Aufhängemittel (36) und/oder Transportmittel (TRM) für Behandlungsgut (BG) angeordnet und mit diesem Verschlusselement in die Mikrowellenkammer einfahrbar sowie mikrowellenfest bzw. mikrowellendicht ausgebildet sind.

4. Einrichtung nach einem der Ansprüche 1 bis 3, dadurch gekennzeichnet, dass mindestens ein Teil der Mikrowellenkammer (MK2) einschliesslich einer mit ihr verbundenen Mikrowellenspeisung (MS) zur Umstellung zwischen Schliesszustand und Offenzustand beweglich ausgebildet ist und in der Schliessstellung mit einer Abschlussvorrichtung in mikrowellendichte Verbindung tritt.

5. Einrichtung nach Anspruch 4, dadurch gekennzeichnet, dass die Abschlussvorrichtung (AV2) im wesentlichen ortsfest ruhend angeordnet ist.

6. Einrichtung nach Anspruch 4, dadurch gekennzeichnet, dass zusätzlich die Abschlussvorrichtung zur Umstellung zwischen Schliesszustand und Offenzustand beweglich ausgebildet ist.

7. Einrichtung nach Anspruch 1 oder 2, dadurch gekennzeichnet, dass ein erster Teil (KT1) der Mikrowellenkammer sowie ein als Verschlusselement (VE4) ausgebildeter Bestandteil der Abschlussvorrichtung (AV4) mit gegenseitigem Abstand unter Bildung eines Beschickungsdurchlasses (BDL4) im wesentlichen ruhend angeordnet sind, und dass ein zweiter Teil (KT2) der Mikrowellenkammer als weiterer Bestandeil der Abschlussvorrichtung (AV4) zwischen Schliess- und Offenstellung beweglich ausgebildet ist.

8. Einrichtung nach Anspruch 7, dadurch gekennzeichnet, dass der zweite Teil (KT2) der Mikrowellenkammer als den ersten Kammerteil (KT1) verschiebbar umgreifender und mit diesem durch eine Mikrowellendichtung (MD2) verbundener Mantelkörper ausgebildet ist.

9. Einrichtung nach einem der vorangehenden Ansprüche, dadurch gekennzeichnet, dass Halterungs- bzw. Transportmittel (TM) im Bereich einer im Betriebszustand mikrowellenseitigen Oberfläche des Verschlusselementes angeordnet und mit diesem in die Mikrowellenkammer einfahrbar und mikrowellenfest bzw. mikrowellendicht ausgebildet sind.

10. Einrichtung nach Anspruch 9, dadurch gekennzeichnet, dass mindestens ein Verschlusselement einen sich längs einer Aussen kontur des Verschlusselementes erstreckenden Mikrowellen-Dichtungsbereich aufweist, der im Schliesszustand einem entsprechenden Mikrowellen- Dichtungsbereich der Mikrowellenkammer zugeordnet ist, und dass Aufnahme-, Auflage-, Halte- und/oder Transportmittel für Behandlungsgut auf einem mikrowellenseitigen Oberflächenabschnitt und innerhalb des Mikrowellen-Dichtungsbereichs des Verschlusselementes angeordnet sind.

11. Einrichtung nach einem der vorangehenden Ansprüche, dadurch gekennzeichnet, dass für die Relativbewegung eines Verschlusselementes ein wenigstens abschnittsweise gekrümmter Verlauf vorgesehen ist.

12. Einrichtung nach Anspruch 11, dadurch gekennzeichnet, dass für den gekrümmten Verlauf der Relativbewegung zwischen Verschlusselement und Mikrowellenkammer ein Mehrlenkergetriebe und/oder ein Gleitbahn- bzw. Rollbahngetriebe vorgesehen ist.

## Claims

1. Installation for applying microwave to materials or unit loads, comprising the following features:
a) there is provided a microwave chamber, especially a multimodal one, showing at least one charging passageway and a closure device together with a shutter element;
b) at least a first part of said microwave chamber and said closure device are movably mounted one in relation to the other, and there is provided a positioning device for changing between a closed position and an open position;
the installation being characterized in that
c) in the range of a surface of shutter element (VE1) an in operational condition microwave-facing there are arranged transport means (TRM) for advancing the products (BG) to be treated in a continuous passing mode, said transport means being designed movable into the microwave chamber (MK1) with a closing movement of said shutter element as well as microwave-resistant or microwave-tight resp..

2. Installation according to claim 1, characterized in that the charging passageway (BDL3) in connection with a high-level transport system is located in the range of the ceiling of said microwave chamber (MK3).

3. Installation according to claim 2, characterized in that in the range of an in operational condition microwave-facing surface of the shutter element (VE3) there are arranged suspension means (36) and/or transport means (TRM) for products (BG) to be treated, and said suspension or transport means being designed movable into the microwave chamber together with said shutter element as well as microwave-resistant or microwave-tight resp..

4. Installation according to anyone of claims 1 to 3, characterized in that at least a part of said microwave chamber (MK2) including microwave feeding means (MS) is designed movable for changing between closed and open position, and in said closed position gets in a microwave-tight connection with a closure device.

5. Installation according to claim 4, characterized in that the closure device (AV2) is arranged in a substantially static position.

6. Installation according to claim 4, characterized in that additionally said closure device is arranged movable for changing between closed and open condition.

7. Installation according to claim 1 or 2, characterized in that a first part (KT1) of said microwave chamber as well as a part of said closure device (AV4) designed as the said shutter element (VE4) are arranged substantially static with a mutual distance so as to form said charging passageway, and in that a second part (KT2) of the microwave chamber is designed as a further part of said closure device (AV4) movable between closed and open position.

8. Installation according to claim 7, characterized in that the said second part (KT2) of the microwave chamber is shaped as a sleeve body movably encompassing said first chamber part (KT1) and being connected therewith by means of a microwave sealing (MD2).

9. Installation according to anyone of the preceding claims, characterized in that holding or transport means (TM) resp. are arranged in the range of an in the operating condition microwave-facing surface of said shutter element, said holding or transport means being movable into said microwave chamber together with said shutter element and microwave-resistant or microwave-tight resp..

10. Installation according to claim 9, characterized in that at least one shutter element shows a microwave sealing range extending along an outside contour of said shutter element, in the closed condition said sealing range being coordinated with a corresponding microwave-sealing range of the microwave chamber, and in that housings supporting holding and/or transport means resp. are arranged on a microwave-facing surface section and within the microwave sealing range of said shutter element.

11. Installation according to anyone of the preceding claims, characterized in that a path curved at least by sections, is provided for the relative movement of a shutter element.

12. Installation according to claim 11, characterized in that for said curved path of the relative movement between said shutter element and the microwave chamber there is provided a multi-lever gear and/or a slide-path or roller-path gear resp..

## Revendications

1. Dispositif pour la sollicitation par micro-ondes de matériaux ou de pièces, comprenant les caractéristiques suivantes :
a) il est prévu une enceinte à micro-ondes notamment multimode qui présente au moins un passage de chargement ainsi qu'un dispositif d'arrêt avec un élément de fermeture ;
b) au moins une première partie de l'enceinte à micro-ondes et le dispositif d'arrêt sont logés d'une manière déplaçable l'un par rapport à l'autre, et il est prévu un dispositif de réglage pour le changement entre la position de fermeture et la position d'ouverture;
le dispositif est caractérisé en ce que
c) sont disposés au voisinage d'une surface, côté micro-ondes à l'état de fonctionnement, de l'élément de fermeture (VE1) des moyens de transport (TRM) pour le passage-la poussée du produit à traiter (BG) et sont réalisés, avec un mouvement de fermeture de l'élément de fermeture, d'une manière insérable dans l'enceinte à micro-ondes (MK1) ainsi que d'une manière résistant aux micro-ondes respectivement étanche aux micro-ondes.

2. Dispositif selon la revendication 1, caractérisé en ce que le passage de chargement (BDL3), en liaison avec un système de transport guidé en hauteur, est disposé dans la zone de plafond de l'enceinte à micro-ondes (MK3).

3. Dispositif selon la revendication 2, caractérisé en ce que sont disposés au voisinage d'une surface, côté micro-ondes à l'état de fonctionnement, de l'élément de fermeture (VE3) des moyens de suspension (36) et/ou des moyens de transport (TRM) pour le produit à traiter (BG) et sont réalisés d'une manière insérable avec cet élément de fermeture dans l'enceinte à micro-ondes et d'une manière résistant aux micro-ondes respectivement étanche aux micro-ondes.

4. Dispositif selon l'une des revendications 1 à 3, caractérisé en ce qu'au moins une partie de l'enceinte à micro-ondes (MK2) conjointement avec une alimentation en micro-ondes (MS) reliée à celle-ci, est réalisée de manière mobile en vue d'un changement entre l'état de fermeture et l'état d'ouverture et, en position de fermeture, entre avec un dispotitif d'arrêt en liaison étanche aux micro-ondes.

5. Dispositif selon la revendication 4, caractérisé en ce que le dispositif d'arrêt (AV2) est disposé sensiblement d'une manière fixe.

6. Dispositif selon la revendication 4, caractérisé en ce que de plus, le dispositif d'arrêt est réalisé d'une manière déplaçable et vue d'un changement entre l'état de fermeture et l'état d'ouverture.

7. Dispositif selon la revendication 1 ou 2, caractérisé en ce qu'une première partie (KT1) de la chambre à micro-ondes ainsi qu'un composant du dispositif d'arrêt (AV4) réalisé en tant qu'élément de fermeture (VE4) sont disposés, selon un écart mutuel, d'une manière sensiblement fixe en formant un passage de chargement (BDL4), et en ce qu'une deuxième partie (KT2) de l'enceinte à micro-ondes est réalisée d'une manière déplaçable, en tant que composant supplémentaire du dispositif d'arrêt (AV4) entre les positions de fermeture et d'ouverture.

8. Dispositif selon la revendication 7, caractérisé en ce que la deuxième partie (KT2) de l'enceinte à micro-ondes est réalisée en tant que corps d'enveloppe entourant d'une manière déplaçable la première partie d'enceinte (KT1) et relié à celle-ci par une garniture étanche aux micro-ondes (MD2).

9. Dispositif selon l'une des revendications précédentes, caractérisé en ce que des moyens de retenue respectivement de transport (TM) sont disposés au voisinage d'une surface, côté micro-ondes à l'état de fonctionnement, de l'élément de fermeture et sont réalisés avec celui-ci d'une manière insérable dans l'enceinte à micro-ondes et d'une manière résistant aux micro-ondes respectivement étanche aux micro-ondes.

10. Dispositif selon la revendication 9, caractérisé en ce qu'au moins un élément de fermeture présente une zone étanche aux micro-ondes s'étendant le long d'un contour extérieur de l'élément de fermeture qui, à l'état de fermeture, est associée à une zone étanche aux micro-ondes correspondante de l'enceinte à micro-ondes, et que des moyens de réception, de support, de retenue et/ou de transport pour le produit à traiter sont disposés sur un tronçon de surface côté micro-ondes et à l'intérieur de la zone étanche aux micro-ondes de l'élément de fermeture.

11. Dispositif selon l'une des revendications précédentes, caractérisé en ce qu'il est prévu pour le déplacement relatif d'un élément de fermeture une allure courbée au moins par tronçons.

12. Dispositif selon la revendication 11, caractérisé en ce qu'il est prévu pour l'allure courbée du déplacement relatif entre l'élément de fermeture et l'enceinte à micro-ondes un mécanisme à plusieurs bielles et/ou un mécanisme à voie de glissement respectivement voie de roulement.
